# FASCICULE DE BREVET EUROPEEN

(11) **EP 3 939 151 B1**
(45) Date de publication et mention de la délivrance du brevet: **22.03.2023**
(21) Numéro de dépôt: 20706794.3
(22) Date de dépôt: 04.02.2020
(51) Int. Cl.: H02K 35/02, H02K 7/18

(54) **DISPOSITIF ELECTROMAGNETIQUE**
ELEKTROMAGNETISCHE VORRICHTUNG
ELECTROMAGNETIC DEVICE

(30) Priorité: 15.03.2019 FR 1902692
(43) Date de publication de la demande: 19.01.2022
(73) Titulaire: Commissariat à l'Energie Atomique et aux Energies Alternatives, 75015 Paris (FR)
(72) Inventeur: BOISSEAU, Sébastien, 38054 GRENOBLE CEDEX 09 (FR); ALESSANDRI, Baptiste, 38054 GRENOBLE CEDEX 09 (FR); BOUCAUD, Matthieu, 38054 GRENOBLE CEDEX 09 (FR); DELETTE, Gérard, 38054 GRENOBLE CEDEX 09 (FR); TOSONI, Olivier, 38054 GRENOBLE CEDEX 09 (FR)
(74) Mandataire: Brevalex
(86) Numéro de dépôt international: PCT/FR2020/050177
(87) Numéro de publication internationale: WO 2020/188159

(56) Documents cités:
- WO-A1-2019/002775
- CN-A- 103 733 485
- FR-A1- 2 928 501
- FR-A1- 2 953 660
- FR-A1- 3 017 011
- FR-A1- 3 068 539
- US-A1- 2014 285 296
- US-A1- 2021 143 708

## Description

### DOMAINE TECHNIQUE

La présente invention concerne un convertisseur d'énergie électromagnétique et/ou micro générateur électromagnétique. En particulier, la présente invention concerne un convertisseur électromagnétique destiné à être mis en oeuvre dans un interrupteur autonome.

### ÉTAT DE LA TECHNIQUE ANTÉRIEURE

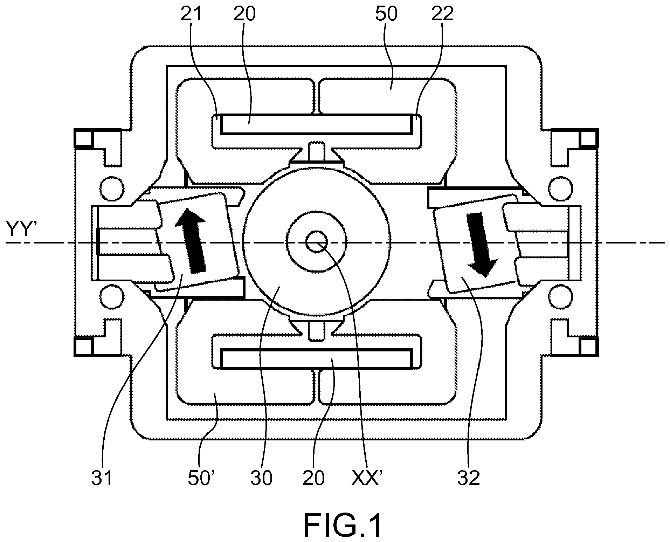

La figure 1 présente un dispositif électromagnétique connu de l'état de la technique et décrit dans le document [1] cité à la fin de la description.

Ce dispositif électromagnétique 10 comprend notamment :
- une bobine conductrice 20 s'étendant entre une première 21 et une seconde 22 extrémité selon un axe d'alignement YY',
- un aimant principal 30 dans un volume V défini par la bobine conductrice,
- deux culasses ferromagnétiques 50 et 50' destinées à guider le flux magnétique généré par l'aimant principal 30 et disposées de part et d'autre d'un plan P1 formé par l'axe d'alignement YY' et un axe pivot XX' perpendiculaire à l'axe d'alignement YY'.

Les deux culasses ferromagnétiques comprennent chacune des extrémités qui forment un logement à l'intérieur duquel l'aimant principal peut pivoter autour de l'axe pivot XX' entre deux positions d'équilibre stable dites, respectivement, première position d'équilibre et seconde position d'équilibre.

Le principe général de fonctionnement du dispositif est basé sur l'activation d'une variation temporelle du flux magnétique traversant la bobine conductrice de manière à faire apparaître une tension électrique aux bornes de cette dernière.

Le dispositif comprend, à cet égard, deux aimants actionneurs 31 et 32 agencés pour coulisser selon l'un et l'autre des sens définis par l'axe d'alignement YY' de manière à contraindre l'aimant principal 30 à adopter l'une ou l'autre des positions d'équilibre.

En particulier, les polarisations magnétiques des deux aimants actionneurs sont dans un plan perpendiculaire à l'axe pivot XX', et en opposition l'une de l'autre.

Un tel dispositif connu de l'état de la technique est relativement compact et permet également de générer une tension électrique appréciable aux bornes de la bobine conductrice 20.

Toutefois, un tel dispositif, lorsqu'il est disposé à proximité d'un élément ferromagnétique, notamment sur un support fait d'un matériau ferromagnétique, voit son fonctionnement perturbé.

Notamment, des fuites magnétiques de l'une ou l'autre des culasses vers l'élément ferromagnétique sont susceptibles d'intervenir, et par voie de conséquence affecter les performances globales du dispositif électromagnétique.

Par ailleurs, la présence d'entrefers au niveau des culasses, par exemple pour faciliter le montage de la bobine conductrice, exacerbe ce phénomène

Ces fuites sont, par ailleurs, particulièrement notables dès lors que le dispositif est à proximité, notamment à une distance inférieure à 5 mm, du support fait d'un matériau ferromagnétique. En de telles circonstances, il a été constaté que l'opposition magnétique entre l'un ou l'autre des aimants actionneurs et l'aimant principal n'est plus suffisante pour provoquer le pivotement dudit aimant principal. En d'autres termes, le positionnement du dispositif électromagnétique à proximité d'un support fait d'un matériau ferromagnétique rend ledit dispositif inopérant.

Un but de la présente invention est donc de proposer un dispositif électromagnétique fonctionnant également à proximité d'un support fait d'un matériau ferromagnétique. Le document WO 2019/002775 décrit un dispositif électromagnétique de l'art antérieur.

### EXPOSÉ DE L'INVENTION

Le but énoncé ci-dessus est atteint par un dispositif électromagnétique comprenant :
- une ou deux bobines conductrices ;
- un aimant principal susceptible de pivoter autour d'un axe pivot XX' entre deux positions d'équilibre,
- une première et une seconde culasse agencées pour guider le flux magnétique généré par l'aimant principal,
- une première et une seconde paire d'aimants comprenant, respectivement, un premier et un second aimant stabilisateur, ainsi qu'un premier et un second aimant actionneur agencés pour coulisser selon l'un et l'autre des sens définis par un axe d'alignement YY' desdits aimants actionneurs et de l'aimant principal, perpendiculaire à l'axe pivot XX', de manière à contraindre l'aimant principal à adopter l'une ou l'autre des positions d'équilibre, les aimants stabilisateurs étant agencés pour que ce coulissement soit accompagné d'un mouvement des aimants stabilisateurs de manière à positionner l'aimant stabilisateur, apparié à l'aimant actionneur contraignant l'aimant principal dans une de ses positions d'équilibre, dans une position donnée permettant audit aimant stabilisateur de s'opposer au fuites magnétiques susceptibles d'intervenir au niveau d'une des deux culasses.

Selon un mode de mise en oeuvre, la première et la seconde culasse comprennent chacune, respectivement, un premier et un second entrefer, et lorsqu'il est dans la position donnée, l'aimant stabilisateur considéré est en regard de l'un des entrefers, la polarité des aimants stabilisateurs étant orientée pour s'opposer aux fuites magnétiques susceptibles d'intervenir au niveau de l'entrefer en regard duquel il se trouve.

Selon un mode de mise en oeuvre, dès lors qu'un aimant stabilisateur est mis en regard d'un des entrefers, l'autre aimant stabilisateur effectue un mouvement de mise en retrait de l'autre entrefer, et plus particulièrement de la culasse comprenant cet autre entrefer.

Selon un mode de mise en oeuvre, la première et la seconde culasse sont disposées, respectivement, de part et d'autre d'un plan P1 formé par l'axe pivot XX' et l'axe d'alignement YY'.

Selon un mode de mise en oeuvre, la première paire d'aimants et le premier entrefer d'une part et la seconde paire d'aimants et le second entrefer d'autre part sont disposées, respectivement, de part et d'autre d'un plan P2 perpendiculaire à l'axe d'alignement YY', et passant par l'axe pivot XX'.

Selon un mode de mise en oeuvre, le premier aimant stabilisateur et le second aimant stabilisateur sont agencés de sorte que lorsque le premier aimant actionneur contraint l'aimant principal dans une des deux positions d'équilibre, le premier aimant stabilisateur est en regard du premier entrefer, tandis que lorsque le second aimant actionneur contraint l'aimant principal dans l'autre des deux positions d'équilibre, le second aimant stabilisateur est en regard du second entrefer.

Selon un mode de mise en oeuvre, le premier et le second aimant actionneurs présentent chacun une polarité dans un plan perpendiculaire aux plans P1 et P2, et antiparallèles l'une de l'autre.

Selon un mode de mise en oeuvre, un axe, dit premier axe, portant la polarité du premier aimant actionneur, ainsi qu'un autre axe, dit second axe, portant la polarité du second aimant actionneur forment chacun un angle alpha non nul avec l'axe d'alignement YY'.

Selon un mode de mise en oeuvre, le premier entrefer et l'intersection du premier axe avec le plan P2 d'une part, et le second entrefer et l'intersection du second axe avec le plan P2 sont disposés, respectivement, de part et d'autre du plan P1.

Selon un mode de mise en oeuvre, le second entrefer et l'intersection du premier axe avec le plan P2 d'une part, et le premier entrefer et l'intersection du second axe avec le plan P2 sont disposés, respectivement, de part et d'autre du plan P1.

Selon un mode de mise en oeuvre, le premier et le second aimant actionneurs, ainsi que le premier et le second aimant stabilisateurs sont agencés pour coulisser simultanément et de manière solidaire, avantageusement le premier et le second aimant actionneurs ainsi que le premier et le second aimant stabilisateurs sont maintenus en liaison fixe par une glissière.

Selon un mode de mise en oeuvre, le dispositif comprend une première et une seconde face, respectivement, de part et d'autre d'un plan P3 perpendiculaire aux plans P1 et P2, le premier et le second aimant stabilisateur étant agencés pour être mis en regard, respectivement, du premier et du second entrefer par la seconde face.

Selon un mode de mise en oeuvre, la polarité des aimants stabilisateurs est perpendiculaire au plan P3.

Selon un mode de mise en oeuvre, la première culasse et la seconde culasse sont symétriques l'une de l'autre par rapport à l'axe pivot XX'.

Selon un mode de mise en oeuvre, le dispositif est soit un convertisseur d'énergie électromagnétique soit un micro générateur électromagnétique.

L'invention concerne également un interrupteur comprenant un dispositif électromagnétique selon la présente invention.

### BRÈVE DESCRIPTION DES DESSINS

D'autres caractéristiques et avantages apparaîtront dans la description qui va suivre du dispositif électromagnétique selon l'invention, donnés à titre d'exemples non limitatifs, en référence aux dessins annexés dans lesquels :
La figure 1 est une représentation schématique selon un plan de coupe comprenant l'axe d'alignement YY' et perpendiculaire à l'axe pivot XX', d'un dispositif électromagnétique d'un dispositif connu de l'état de la technique et décrit dans le document [1] cité à la fin de la description ;
La figure 2A est une représentation en perspective selon une première face du dispositif électromagnétique selon la présente invention ;
La figure 2B est une représentation en perspective selon une seconde face du dispositif électromagnétique selon la présente invention ;
La figure 3A est une vue selon la première face du dispositif électromagnétique selon la présente invention, l'aimant principal étant contraint dans sa première position d'équilibre ;
La figure 3B est une vue selon la première face du dispositif électromagnétique selon la présente invention, l'aimant principal étant contraint dans sa seconde position d'équilibre.

### EXPOSÉ DÉTAILLÉ DE MODES DE RÉALISATION PARTICULIERS

L'invention décrite de manière détaillée ci-dessous met oeuvre un convertisseur d'énergie électromagnétique et/ou micro générateur électromagnétique (ci-après « dispositif électromagnétique ») comprenant une bobine conductrice hébergeant dans son volume interne V un aimant principal. En particulier, l'aimant principal est susceptible de pivoter, sous l'action d'aimants actionneurs, afin de générer une variation temporelle de flux magnétique dans la bobine conductrice, et ainsi faire apparaître une tension électrique aux bornes de ladite bobine.

Par ailleurs, le dispositif électromagnétique comprend deux culasses ferromagnétiques agencées pour guider le flux magnétique généré par l'aimant principal, et, éventuellement, pourvues chacune d'un entrefer au niveau duquel des fuites magnétiques sont susceptibles de prendre naissance. Le dispositif met donc en oeuvre des aimants stabilisateurs agencés pour limiter, voire prévenir, les fuites magnétiques susceptibles de se produire au niveau de l'une ou l'autre des culasses dès lors que l'aimant principal pivote d'une position d'équilibre vers l'autre position d'équilibre. Plus particulièrement, en présence d'entrefers, les aimants stabilisateurs sont agencés pour être positionnés en regard, respectivement, de l'un ou l'autre des entrefers dès lors que l'aimant pivote d'une position d'équilibre vers l'autre position d'équilibre.

L'invention qui est décrite de manière détaillée ci-après met en oeuvre des culasses pourvues d'un entrefer. En particulier, tel que décrit, le dispositif électromagnétique selon la présente invention met en oeuvre des aimants stabilisateurs agencés pour limiter les fuites magnétiques susceptibles de prendre naissance au niveau desdits entrefer.

Toutefois, l'invention, qui n'est pas limitée à ce seul aspect, peut être généralisée à un dispositif dont les culasses n'ont pas d'entrefer.

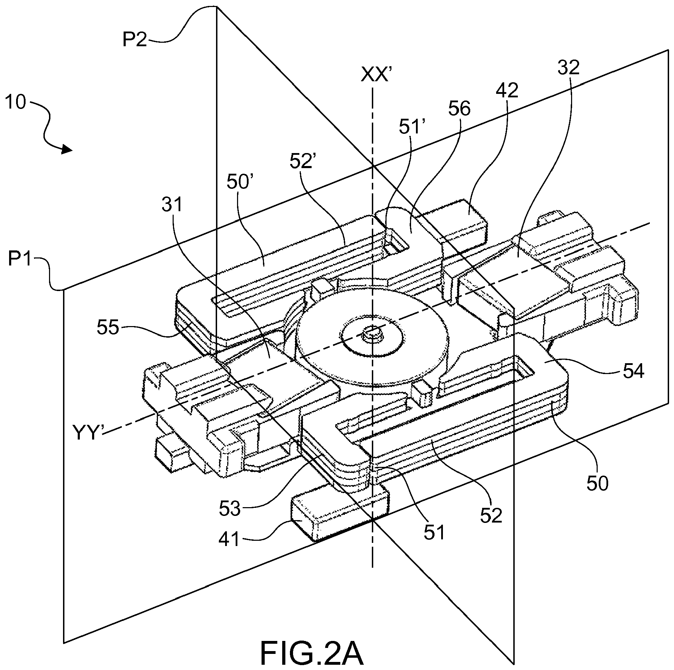

Les figures 2A à 3B représentent des exemples de mise en oeuvre d'un dispositif électromagnétique 10 selon la présente invention.

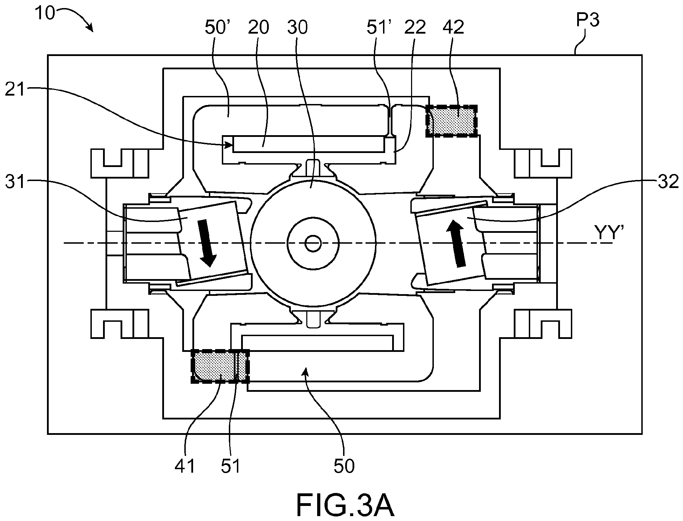

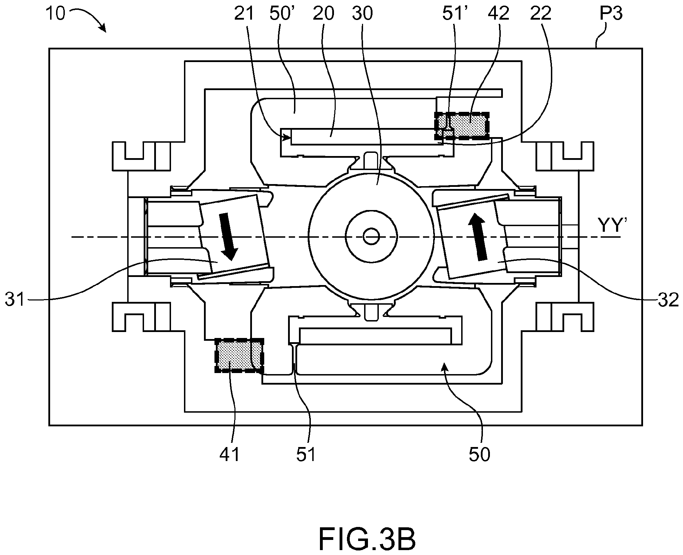

Dans ces exemples, le dispositif électromagnétique 10 est pourvu d'une bobine conductrice 20 qui s'étend selon un axe, dit axe d'alignement YY', entre deux extrémités 21 et 22 (figures 3A et 3B).

L'axe d'alignement YY' peut être un axe de symétrie de la bobine conductrice 20.

La bobine conductrice 20 est faite d'un enroulement d'un fil conducteur, par exemple un fil en cuivre, selon l'axe d'alignement YY'. La bobine conductrice 20 comprend par ailleurs un volume interne V ouvert selon les deux extrémités de ladite bobine. Il est évident sans qu'il soit nécessaire de le préciser que le fil de cuivre comprend deux extrémités qui sont, dans toute la suite de la présente description, nommées bornes de la bobine conductrice 20.

Le dispositif électromagnétique 10 comprend également un aimant principal 30. L'aimant peut par exemple être disposé dans le volume interne V de la bobine conductrice 20.

L'homme du métier pourra également considérer un dispositif électromagnétique pourvu de deux bobines conductrices enroulées, respectivement, autour d'une première culasse et d'une seconde culasse décrites ci-après. La suite de l'énoncé est toutefois limitée à la description d'un dispositif électromagnétique pourvu d'une unique bobine conductrice.

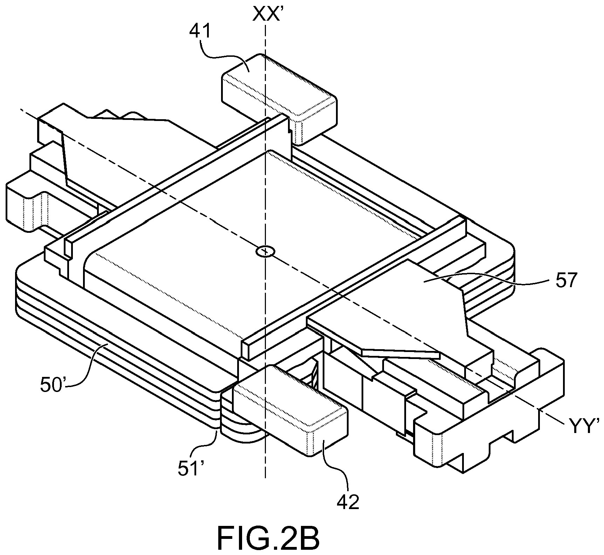

Le dispositif électromagnétique 10 comprend également deux culasses ferromagnétiques dites, respectivement, première culasse 50 et seconde culasse 50' (figures 2A, 2B, 3A et 3B).

La première culasse 50 et la seconde culasse 50' comprennent chacune deux extrémités qui forment un logement à l'intérieur duquel l'aimant principal 30 est maintenu en liaison pivot de manière à pouvoir pivoter autour d'un axe pivot XX' perpendiculaire à l'axe d'alignement YY' (Figure 2A et 2B). Chacune des deux culasses se referme alors sur l'aimant principal 30. Autrement dit, les deux extrémités d'une culasse sont espacées de manière à ménager un logement à l'intérieur duquel se trouve l'aimant principal, et de sorte que chacune des deux culasses forme avec l'aimant une boucle magnétique fermée.

De manière particulièrement avantageuse le logement est de forme complémentaire à l'aimant principal 30.

Les culasses ferromagnétiques peuvent être disposées autour de l'aimant principal avec un jeu de largeur parfaitement déterminée de manière à réaliser des lames d'air disposées en vis-à-vis l'une de l'autre. La largeur de la lame d'air située entre la surface externe de l'aimant principal 30 et l'une ou l'autre des extrémités de la culasse ferromagnétique détermine l'intensité du flux magnétique circulant dans ladite culasse. La grandeur qui permet de déterminer l'influence de l'entrefer sur le flux magnétique est connue sous le terme de reluctance. À une largeur donnée de lame d'air correspond une valeur de reluctance précise.

L'aimant principal 30 peut avoir une surface externe cylindrique.

Il est par ailleurs entendu, sans qu'il soit nécessaire de le préciser, que le logement formé par les extrémités des culasses ferromagnétiques est disposé dans le volume interne V de la bobine conductrice 20. En particulier, tel que représenté aux figures 3A et 3B, le fil conducteur formant la bobine conductrice 20 entoure une première section de chaque culasse ferromagnétique.

La première culasse 50 et la seconde culasse 50' peuvent être disposées de part et d'autre d'un plan P1 comprenant l'axe d'alignement YY' et l'axe pivot XX' (figure 2A et 2B).

La première et la seconde culasse peuvent comprendre chacune une section externe dites, respectivement, première section externe 52 et seconde section externe 52'. Les sections externes peuvent présenter une forme généralement allongée selon une direction parallèle à l'axe d'alignement YY' et être prolongées en chacune de leurs extrémités par des bras 53, 54, 55, 56 (figure 2A) se refermant sur l'aimant principal 30.

Afin de faciliter l'assemblage de la bobine 20 avec la première 50 et la seconde 50' culasse, ces deux dernières sont généralement démontables.

Par conséquent, la première 50 et la seconde 50' culasses peuvent comprendre chacune un entrefer (« air gap » selon la terminologie Anglo-Saxonne) dits, respectivement, premier 51 et second 51' entrefer (figures 2A, 2B, 3A et 3B).

Le premier et le second entrefer peuvent être disposés, respectivement sur la première et la seconde section externe.

Chacune des deux culasses ferromagnétiques peut comprendre au moins un matériau ferromagnétique choisi parmi : les alliages à base de Fer et à forte induction à saturation (par exemple une induction à saturation supérieure à 1,5 Tesla) tels que le Fer pur, le fer allié au Si (FeSi), le Fer allié au Ni (FeNi), le fer allié au Co (FeCo). Ces alliages peuvent également comprendre des éléments d'addition tels que le Cr, P, Cu, Al.

Le matériau ferromagnétique peut également comprendre des ferrites de structure spinelle (telle que MnZn, NiZn). Cette dernière, du fait de sa faible conductivité électrique, est avantageuse car elle permet de diminuer les pertes par courant de Foucault. Toutefois son induction à saturation reste faible.

Enfin, le matériau ferromagnétique peut également comprendre un alliage à base de Fe de type verre métallique élaboré sous forme amorphe ou nanocristalline.

Chaque culasse forme avec l'aimant principal 30 un circuit magnétique fermé. Autrement dit, chacune des culasses ferromagnétiques permet de guider le flux magnétique selon un circuit fermé, et ainsi limiter les fuites magnétiques.

Le dispositif électromagnétique comprend en outre deux paires d'aimants dites, respectivement, première paire et seconde paire.

Plus particulièrement, les paires d'aimants et les entrefers sont agencés de sorte que la première paire et le premier entrefer d'une part, et la seconde paire et le second entrefer d'autre part soient disposés, respectivement, de part et d'autre d'un plan P2 perpendiculaire à l'axe d'alignement YY' et passant par l'axe pivot XX' (figure 2A).

La première paire d'aimants comprend un premier aimant actionneur 31 et un premier aimant stabilisateur 41.

De manière équivalente, la seconde paire d'aimants comprend un second aimant actionneur 32 et un second aimant stabilisateur 42.

L'aimant principal 30, le premier aimant actionneur 31 et le second aimant actionneur 32 sont alignés selon l'axe d'alignement YY'.

Le premier 31 et le second 32 aimant actionneur sont agencés pour coulisser de manière simultanée et solidaire selon l'un ou l'autre des sens définis par l'axe d'alignement YY'. Par « coulissement solidaire », on entend un coulissement de même amplitude et dans le même sens.

Par ailleurs, les aimants actionneurs 31, 32 présentent chacun une polarité magnétique antiparallèle l'une de l'autre, et comprise dans un plan P3 comprenant l'axe d'alignement YY' et perpendiculaire à l'axe pivot XX'. Plus particulièrement, la polarité magnétique du premier aimant actionneur 31 est portée par un axe, dit premier axe, différent de l'axe d'alignement YY'. En d'autres termes, la polarité magnétique du premier aimant actionneur 31 forme un angle alpha non nul (modulo π) avec l'axe d'alignement YY'.

De manière équivalente, la polarité magnétique du second aimant actionneur 32 est portée par un axe, dit second axe, parallèle au premier axe.

Selon une première configuration, le premier entrefer et l'intersection du premier axe avec le plan P2 d'une part, et le second entrefer et l'intersection du second axe avec le plan P2 sont disposés, respectivement, de part et d'autre du plan P1.

Selon une seconde configuration, le second entrefer et l'intersection du premier axe avec le plan P2 d'une part, et le premier entrefer et l'intersection du second axe avec le plan P2 sont disposés, respectivement, de part et d'autre du plan P1.

Le coulissement simultané et solidaire des aimants actionneurs 31 et 32 selon l'un ou l'autre des sens définis par l'axe d'alignement YY' permet de contraindre l'aimant principal 30 d'adopter, par pivotement autour de l'axe pivot XX', l'une ou l'autre de deux positions d'équilibre dites, respectivement, première position et seconde position.

Par « position d'équilibre », on entend une position d'équilibre stable, et notamment une position magnétiquement stable.

Dès lors que l'aimant principal 30 peut adopter deux positions d'équilibre différentes sous l'action des aimants actionneurs, il est entendu, sans qu'il soit nécessaire de le préciser, que la polarité magnétique de l'aimant principal 30 n'est pas parallèle à l'axe pivot XX'. À cet égard, et de manière avantageuse, la polarité magnétique de l'aimant principal est comprise dans le plan P3.

La rotation de l'aimant principal de sa première position vers sa seconde position est nommée « cycle aller », tandis que la rotation inverse est nommée « cycle retour ».

L'adoption de l'une ou l'autre des positions d'équilibre par l'aimant principal 30 est régie par l'amplitude d'interaction entre ledit aimant principal 30 et les aimants actionneurs 31, 32.

À titre illustratif, l'aimant principal 30 peut être, à un instant initial, dans la seconde position. Autrement dit, le second aimant actionneur 32 se trouve plus à proximité de l'aimant principal 30 que le premier aimant actionneur 31 (figure 3b).

Une force d'origine mécanique par exemple exercée sur le premier aimant actionneur 31 permet alors d'engager le coulissement du premier aimant actionneur 31 et du second aimant actionneur 32, de sorte que le premier aimant actionneur 31 s'approche de l'aimant principal 30 et le second aimant actionneur 32 s'en éloigne.

Donc lors du coulissement des deux aimants actionneurs, l'interaction magnétique entre le second aimant actionneur 32 et l'aimant principal 30 diminue, tandis que celle entre le premier aimant actionneur 31 et l'aimant principal 30 augmente, faisant ainsi croître l'instabilité magnétique de l'aimant principal 30.

Une rotation brutale de l'aimant principal 30 autour de l'axe pivot XX' est alors observée dès lors que l'instabilité magnétique induite par le coulissement des deux aimants actionneurs n'est plus tenable.

Le premier aimant actionneur 31 et le second aimant actionneur 32 peuvent être identiques.

Par « identiques », on entend de même forme et de même polarité magnétique.

Le premier aimant stabilisateur 41 et le second aimant stabilisateur 42 sont agencés de sorte que le coulissement du premier 31 et du second 32 aimant actionneur soit accompagné d'un mouvement des aimants stabilisateurs 41 et 42.

Notamment, lors de ce mouvement, l'aimant stabilisateur apparié à l'aimant actionneur contraignant l'aimant principal 30 dans une position d'équilibre vient se mettre en regard d'un des entrefers, tandis que l'autre aimant stabilisateur est mis en retrait de l'autre entrefer.

Par ailleurs, la polarité magnétique de chaque aimant stabilisateur 41 et 42 est orientée pour s'opposer aux fuites magnétiques intervenant au niveau de l'entrefer en regard duquel il se trouve.

L'orientation de la polarité magnétique de chaque aimant stabilisateur est alors déterminée par l'orientation de la polarité magnétique de l'aimant actionneur avec lequel il forme une paire d'aimants.

En particulier, si un aimant actionneur 31, ou 32 contraint l'aimant principal 30 dans une position d'équilibre par un pôle donné (par exemple son pôle nord), l'aimant stabilisateur, avec lequel il forme une paire, met en regard de l'entrefer un pôle de même nature. Ainsi, un aimant stabilisateur qui est en regard d'un entrefer d'une des deux culasses permet de limiter les fuites magnétiques susceptibles d'intervenir au niveau dudit entrefer.

L'un et l'autre des aimants stabilisateurs peut être mis en regard, respectivement, de l'un et l'autre des entrefers par une seconde face du dispositif électromagnétique opposée à une première face dudit dispositif, lesdites faces étant disposées de part et d'autre du plan P3. Selon cette configuration, la polarité des aimants stabilisateurs est avantageusement perpendiculaire au plan P3.

Le mouvement des aimants stabilisateurs 41 et 42 lors du coulissement des aimants actionneurs 31 et 32 peut également être un coulissement.

Plus particulièrement, le coulissement des aimants stabilisateurs peut être exécuté selon l'une et l'autre des directions définies par l'axe d'alignement YY'.

À cet égard, les aimants stabilisateurs et les aimants actionneurs sont liés entre eux par une liaison fixe. Notamment, les aimants stabilisateurs et les aimants actionneurs peuvent être fixés sur une glissière ou sur un chariot mobile 57 (figure 2b).

Ainsi, lorsque l'aimant principal 30 est contraint dans sa première position par le premier aimant actionneur 31, le premier aimant stabilisateur 41 est en regard du premier entrefer 51 tandis que le second aimant stabilisateur 42 est en retrait du second entrefer 51'. Un effort de poussé exercé par exemple sur le second aimant actionneur 32 afin d'exécuter un cycle aller fait alors coulisser la première paire et la seconde paire d'aimants.

Lors de ce coulissement, le second aimant actionneur 32 s'approche de l'aimant principal 30 et le premier aimant actionneur 31 s'en éloigne. Simultanément à ce coulissement, le second aimant stabilisateur 42 se positionne en regard du second entrefer 51', tandis que le premier aimant stabilisateur 41 est mis en retrait du premier entrefer 51.

Par « mise en retrait », on entend un aimant stabilisateur à distance de l'entrefer, et notamment de la culasse. En particulier, un aimant stabilisateur est en retrait d'une culasse dès lors que la projection de ladite culasse et la projection dudit aimant stabilisateur, sur le plan P3, sont en recouvrement nul.

Le positionnement du second aimant stabilisateur 42 en regard du second entrefer 52' permet de limiter la circulation d'un flux magnétique dans la seconde culasse 50', et par voie de conséquence limiter les fuites magnétiques susceptibles d'intervenir au niveau de cet entrefer 52' dès lors que le dispositif est positionné sur un support fait d'un matériau ferromagnétique.

Ainsi, lors du coulissement de la première paire et de la seconde paire, l'interaction magnétique entre le second aimant actionneur 32 et l'aimant principal 30 augmente, tandis que celle entre le premier aimant actionneur 31 et l'aimant principal 30 diminue, faisant ainsi croître l'instabilité magnétique de l'aimant principal 30.

Une rotation brutale de l'aimant principal 30 autour de l'axe pivot XX' est alors observée dès lors que l'instabilité magnétique induite par le coulissement de la première paire et de la seconde paire n'est plus tenable.

En l'absence d'aimants stabilisateurs tel que proposé dans la présente invention, l'instabilité magnétique source du retournement de l'aimant principal 30 ne serait pas observée si le dispositif électromagnétique était disposé à proximité ou sur un support fait d'un matériau ferromagnétique.

À titre illustratif, le dispositif électromagnétique illustré à la figure 2A est susceptible de délivrer une énergie de 600µJ dès lors qu'il est à distance d'un support fait d'un matériau ferromagnétique.

Le même dispositif, positionné sur un support fait d'un matériau ferromagnétique délivre une énergie de 400 µJ. En l'absence d'aimant stabilisateur, le dispositif à proximité d'un support fait d'un matériau ferromagnétique ne délivre aucune énergie car le retournement brutal de l'aimant principal 30 ne peut être amorcé.

Le dispositif électromagnétique est alors avantageusement mis en oeuvre pour la réalisation d'un convertisseur d'énergie électromagnétique soit un micro-générateur électromagnétique.

Un tel dispositif peut alors être fixé, par exemple par aimantation, sur un support fait d'un matériau ferromagnétique, tout en conservant sa fonctionnalité de conversion d'énergie mécanique en énergie électromagnétique.

Le dispositif électromagnétique est avantageusement mis en oeuvre pour la réalisation d'un interrupteur autonome sans fil et/ou sans batterie destiné à assurer la commande de fonctions domotiques telles que l'éclairage, l'ouverture et la fermeture de volets roulants.

### REFERENCES

[1] FR 17 56233.

## Revendications

1. Dispositif électromagnétique (10) comprenant :
- une ou deux bobines conductrices (20) ;
- un aimant principal (30) susceptible de pivoter autour d'un axe pivot XX' entre deux positions d'équilibre,
- une première et une seconde culasse (50, 50') agencées pour guider le flux magnétique généré par l'aimant principal (30),
- une première et une seconde paire d'aimants comprenant, respectivement, un premier et un second aimant stabilisateur (41, 42), ainsi qu'un premier et un second aimant actionneur (31, 32) agencés pour coulisser selon l'un et l'autre des sens définis par un axe d'alignement YY' desdits aimants actionneurs (31, 32) et de l'aimant principal (30), perpendiculaire à l'axe pivot XX', de manière à contraindre l'aimant principal (30) à adopter l'une ou l'autre des positions d'équilibre, les aimants stabilisateurs (41, 42) étant agencés pour que ce coulissement soit accompagné d'un mouvement des aimants stabilisateurs (41, 42), de manière à positionner l'aimant stabilisateur (41, 42), apparié à l'aimant actionneur (31, 32) contraignant l'aimant principal (30) dans une de ses positions d'équilibre, dans une position donnée permettant audit aimant stabilisateur de s'opposer au fuites magnétiques susceptibles d'intervenir au niveau d'une des deux culasses.

2. Dispositif selon la revendication 1, dans lequel la première et la seconde culasse (50,50') comprennent chacune, respectivement, un premier et un second entrefer (51, 51'), et lorsqu'il est dans la position donnée, l'aimant stabilisateur (41, 42) considéré est en regard de l'un des entrefers (51, 51'), la polarité des aimants stabilisateurs (41, 42) étant orientée pour s'opposer aux fuites magnétiques susceptibles d'intervenir au niveau de l'entrefer en regard duquel il se trouve.

3. Dispositif selon la revendication 2, dans lequel dès lors qu'un aimant stabilisateur (41, 42) est mis en regard d'un des entrefers (51, 51'), l'autre aimant stabilisateur (41, 42) effectue un mouvement de mise en retrait de l'autre entrefer (51, 51'), et plus particulièrement de la culasse comprenant cet autre entrefer (51, 51').

4. Dispositif selon la revendication 2 ou 3, dans lequel la première et la seconde culasse sont disposées, respectivement, de part et d'autre d'un plan P1 formé par l'axe pivot XX' et l'axe d'alignement YY'.

5. Dispositif selon la revendication 4, dans lequel la première paire d'aimants et le premier entrefer (51) d'une part et la seconde paire d'aimants et le second entrefer (51') d'autre part sont disposées, respectivement, de part et d'autre d'un plan P2 perpendiculaire à l'axe d'alignement YY', et passant par l'axe pivot XX'.

6. Dispositif selon la revendication 5, dans lequel le premier aimant stabilisateur (41) et le second aimant stabilisateur (42) sont agencés de sorte que lorsque le premier aimant actionneur (31) contraint l'aimant principal (30) dans une des deux positions d'équilibre, le premier aimant stabilisateur (41) soit en regard du premier entrefer (51), tandis que lorsque le second aimant actionneur (32) contraint l'aimant principal (30) dans l'autre des deux positions d'équilibre, le second aimant stabilisateur (42) soit en regard du second entrefer (51').

7. Dispositif selon la revendication 5 ou 6, dans lequel le premier et le second aimant actionneur (31, 32) présentent chacun une polarité dans un plan perpendiculaire aux plans P1 et P2, et antiparallèles l'une de l'autre.

8. Dispositif selon la revendication 7, dans lequel un axe, dit premier axe, portant la polarité du premier aimant actionneur (31), ainsi qu'un autre axe, dit second axe, portant la polarité du second aimant actionneur (32) forment chacun un angle alpha non nul avec l'axe d'alignement YY'.

9. Dispositif selon la revendication 8, dans lequel le premier entrefer (51) et l'intersection du premier axe avec le plan P2 d'une part, et le second entrefer (51') et l'intersection du second axe avec le plan P2 sont disposés, respectivement, de part et d'autre du plan P1.

10. Dispositif selon la revendication 8, dans lequel le second entrefer (51') et l'intersection du premier axe avec le plan P2 d'une part, et le premier entrefer (51) et l'intersection du second axe avec le plan P2 sont disposés, respectivement, de part et d'autre du plan P1.

11. Dispositif selon l'une des revendications 2 à 10, dans lequel le premier et le second aimant actionneur (31, 32), ainsi que le premier et le second aimant stabilisateur (41, 42) sont agencés pour coulisser simultanément et de manière solidaire, avantageusement le premier et le second aimant actionneur (31, 32) ainsi que le premier et le second aimant stabilisateur (41, 42) sont maintenus en liaison fixe par une glissière.

12. Dispositif selon l'une des revendications 2 à 11, dans lequel le dispositif comprend une première et une seconde face, respectivement, de part et d'autre d'un plan P3 perpendiculaire aux plans P1 et P2, le premieret le second aimant stabilisateur (41, 42) étant agencés pour être mis en regard, respectivement, du premier et du second entrefer (51, 51') par la seconde face.

13. Dispositif selon la revendication 12, dans lequel la polarité des aimants stabilisateurs (41, 42) est perpendiculaire au plan P3.

14. Dispositif selon l'une des revendications 1 à 13, dans lequel la première culasse et la seconde culasse sont symétriques l'une de l'autre par rapport à l'axe pivot XX'.

15. Dispositif selon l'une des revendications 1 à 14, dans lequel le dispositif est soit un convertisseur d'énergie électromagnétique soit un micro-générateur électromagnétique.

16. interrupteur comprenant un dispositif (10) selon l'une des revendications 1 à 15.

## Patentansprüche

1. Elektromagnetische Vorrichtung (10) mit:
- einer oder zwei leitfähigen Spulen (20);
- einem Hauptmagneten (30), der zwischen zwei Gleichgewichtspositionen um eine Schwenkachse XX' schwenken kann,
- einem erstes und einem zweites Joch (50, 50'), die so angeordnet sind, dass sie den vom Hauptmagneten (30) erzeugten magnetischen Fluss führen,
- einem erstes und einem zweites Magnetpaar, die jeweils einen ersten und einen zweiten Stabilisierungsmagneten (41, 42) sowie einen ersten und einen zweiten Stellmagneten (31, 32) aufweisen, die so angeordnet sind, dass sie in der einen oder der anderen der Richtungen gleiten, die definiert ist durch eine Ausrichtungsachse YY' der Stellmagnete (31, 32) und des Hauptmagnete (30), senkrecht zur Schwenkachse XX', so dass der Hauptmagnet (30) gezwungen wird, die eine oder die andere der Gleichgewichtspositionen anzunehmen, wobei die Stabilisierungsmagnete (41, 42) so angeordnet sind, dass dieses Gleiten von einer Bewegung der Stabilisierungsmagnete (41, 42) begleitet wird, um den Stabilisierungsmagneten (41, 42), der mit dem Stellmagneten (31, 32) gepaart ist, der den Hauptmagneten (30) in eine seiner Gleichgewichtspositionen zwingt, in einer gegebenen Position zu positionieren, die es dem Stabilisierungsmagneten ermöglicht, dem magnetischen Leck zu entgegen zu wirken, das im Bereich eines der beiden Jochs auftreten kann.

2. Vorrichtung nach Anspruch 1, bei der das erste und das zweite Joch (50, 50') jeweils einen ersten bzw. einen zweiten Luftspalt (51, 51') aufweisen und der betrachtete Stabilisierungsmagnet (41, 42), wenn er sich in der gegebenen Position befindet, einem der Luftspalte (51, 51') gegenübersteht, wobei die Polarität der Stabilisierungsmagnete (41, 42) so ausgerichtet ist, dass sie magnetischen Leckagen entgegenwirkt, die im Bereich des Luftspalts, dem er gegenübersteht, auftreten können.

3. Vorrichtung nach Anspruch 2, bei der, sobald ein Stabilisierungsmagnet (41, 42) einem der Luftspalte (51, 51') gegenübergestellt wird, der andere Stabilisierungsmagnet (41, 42) eine Bewegung zum Zurückziehen vom anderen Luftspalt (51, 51') und insbesondere des Jochs, das diesen anderen Luftspalt (51, 51') aufweist, ausführt.

4. Vorrichtung nach Anspruch 2 oder 3, bei der das erste und das zweite Joch jeweils auf beiden Seiten einer Ebene P1 angeordnet sind, die durch die Schwenkachse XX' und die Ausrichtungsachse YY' gebildet wird.

5. Vorrichtung nach Anspruch 4, bei der das erste Magnetpaar und der erste Luftspalt (51) einerseits und das zweite Magnetpaar und der zweite Luftspalt (51') andererseits jeweils auf beiden Seiten einer Ebene P2 angeordnet sind, die senkrecht zur Ausrichtungsachse YY' steht und durch die Schwenkachse XX' verläuft.

6. Vorrichtung nach Anspruch 5, wobei der erste Stabilisierungsmagnet (41) und der zweite Stabilisierungsmagnet (42) so angeordnet sind, dass, wenn der erste Stellmagnet (31) den Hauptmagnet (30) in eine der beiden Gleichgewichtspositionen zwingt, der erste Stabilisierungsmagnet (41) dem ersten Luftspalt (51) gegenüberliegt, während, wenn der zweite Stellmagnet (32) den Hauptmagnet (30) in die andere der beiden Gleichgewichtspositionen zwingt, der zweite Stabilisierungsmagnet (42) dem zweiten Luftspalt (51') gegenüberliegt.

7. Vorrichtung nach Anspruch 5 oder 6, wobei der erste und der zweite Stellmagnet (31, 32) jeweils eine Polarität in einer Ebene senkrecht zu den Ebenen P1 und P2 und antiparallel zueinander aufweisen.

8. Vorrichtung nach Anspruch 7, bei der eine Achse, die die als erste Achse bezeichnet wird, die die Polarität des ersten Stellmagneten (31) trägt, sowie eine weitere Achse, die als zweite Achse bezeichnet wird, die die Polarität des zweiten Stellmagneten (32) trägt, jeweils einen Winkel alpha ungleich Null mit der Ausrichtungsachse YY' bilden.

9. Vorrichtung nach Anspruch 8, bei der der erste Luftspalt (51) und der Schnittpunkt der ersten Achse mit der Ebene P2 einerseits und der zweite Luftspalt (51') und der Schnittpunkt der zweiten Achse mit der Ebene P2 andererseits jeweils auf beiden Seiten der Ebene P1 angeordnet sind.

10. Vorrichtung nach Anspruch 8, bei der der zweite Luftspalt (51') und der Schnittpunkt der ersten Achse mit der Ebene P2 einerseits und der erste Luftspalt (51) und der Schnittpunkt der zweiten Achse mit der Ebene P2 andererseits jeweils auf beiden Seiten der Ebene P1 angeordnet sind.

11. Vorrichtung nach einem der Ansprüche 2 bis 10, bei der der erste und der zweite Stellmagnet (31, 32) sowie der erste und der zweite Stabilisierungsmagnet (41, 42) so angeordnet sind, dass sie gleichzeitig und fest verschiebbar sind, vorteilhafterweise werden der erste und der zweite Stellmagnet (31, 32) sowie der erste und der zweite Stabilisierungsmagnet (41, 42) durch eine Schiene in einer festen Verbindung gehalten.

12. Vorrichtung nach einem der Ansprüche 2 bis 11, bei der die Vorrichtung eine erste bzw. eine zweite Seite auf beiden Seiten einer Ebene P3 aufweist, die senkrecht zu den Ebenen P1 und P2 verläuft, wobei der erste und der zweite Stabilisierungsmagnet (41, 42) so angeordnet sind, dass sie durch die zweite Seite dem ersten bzw. dem zweiten Luftspalt (51, 51') gegenübergestellt sind.

13. Vorrichtung nach Anspruch 12, bei der die Polarität der Stabilisierungsmagnete (41, 42) senkrecht zur Ebene P3 ist.

14. Vorrichtung nach einem der Ansprüche 1 bis 13, bei der das erste Joch und das zweite Joch in Bezug auf die Schwenkachse XX' symmetrisch zueinander sind.

15. Vorrichtung nach einem der Ansprüche 1 bis 14, wobei die Vorrichtung entweder ein elektromagnetischer Energiewandler oder ein elektromagnetischer Mikrogenerator ist.

16. Schalter aufweisend eine Vorrichtung (10) nach einem der Ansprüche 1 bis 15.

## Claims

1. Electromagnetic device (10) comprising:
- one or two conductive coils (20);
- a main magnet (30) able to pivot about a pivot axis XX' between two equilibrium positions,
- a first and a second yoke (50, 50') arranged to guide the magnetic flux generated by the main magnet (30),
- a first and a second pair of magnets, comprising, respectively, a first and a second stabilising magnet (41, 42), as well as a first and a second actuating magnet (31, 32) arranged to slide along each of the directions defined by an alignment axis YY' of said actuating magnets (31, 32) and of the main magnet (30), perpendicular to the pivot axis XX', so as to force the main magnet (30) to adopt one or other of the equilibrium positions, the stabilising magnets (41, 42) being arranged so that this sliding is accompanied by a movement of the stabilising magnets (41, 42) so as to position the stabilising magnet (41, 42), paired with the actuating magnet (31, 32) forcing the main magnet (30) into one of its equilibrium positions, in a given position enabling said stabilising magnet to oppose the magnetic leaks liable to occur at one of the two yokes.

2. Device according to claim 1, wherein the first and the second yoke (50, 50') each comprise, respectively, a first and a second air gap (51, 51'), and, when it is in the given position, the stabilising magnet (41, 42) in question faces one of the air gaps (51, 51'), the polarity of the stabilising magnets (41, 42) being oriented to oppose the magnetic leaks liable to occur at the air gap facing which it is located.

3. Device according to claim 2, wherein, as soon as a stabilising magnet (41, 42) is put facing one of the air gaps (51. 51'), the other stabilising magnet (41, 42) makes a movement of retracting from the other air gap (51, 51'), and more particularly from the yoke comprising this other air gap (51, 51').

4. Device according to claim 2 or 3, wherein the first and the second air gap are disposed respectively on either side of a plane P1 formed by the pivot axis XX' and the alignment axis YY'.

5. Device according to claim 4, wherein the first pair of magnets and the first air gap (51) on the one hand and the second pair of magnets and the second air gap (51') on the other hand are disposed respectively on either side of a plane P2 perpendicular to the alignment axis YY', and passing through the pivot axis XX'.

6. Device according to claim 5, wherein the first stabilising magnet (41) and the second stabilising magnet (42) are arranged so that, whether the first actuating magnet (31) forces the main magnet (30) into one of the two equilibrium positions, the first stabilising magnet (41) faces the first airgap (51), while, when the second actuating magnet (32) forces the main magnet (30) into the other of the two equilibrium positions, the second stabilising magnet (42) faces the second air gap (51').

7. Device according to claim 5 or 6, wherein the first and the second actuating magnet (31, 32) each have a polarity in a plane perpendicular to the planes P1 and P2, and antiparallel to each other.

8. Device according to claim 7, wherein an axis, referred to as the first axis, carrying the polarity of the first actuating magnet (31), and another axis, referred to as the second axis, carrying the polarity of the second actuating magnet (32), each form a non-zero angle alpha with the alignment axis YY'.

9. Device according to claim 8, wherein the first air gap (51) and the intersection of the first axis with the plane P2 on the one hand, and the second air gap (51') and the intersection of the second axis with the plane P2 are disposed respectively on either side of the plane P1.

10. Device according to claim 8, wherein the second air gap (51') and the intersection of the first axis with the plane P2 on the one hand, and the first air gap (51) and the intersection of the second axis with the plane P2 are disposed respectively on either side of the plane P1.

11. Device according to one of claims 2 to 10, wherein the first and the second actuating magnet (31, 32), as well as the first and the second stabilising magnet (41, 42), are arranged so as to slide simultaneously and integrally, advantageously the first and the second actuating magnet (31, 32) and the first and the second stabilising magnet (41, 42) are held in fixed connection by a sliding rail.

12. Device according to one of claims 2 to 11, wherein the device comprises a first and a second face, respectively, on either side of a plane P3 perpendicular to the planes P1 and P2, the first and the second stabilising magnet (41, 42) being arranged so as to be placed facing, respectively, the first and the second air gap (51, 51') by the second face.

13. Device according to claim 12, wherein the polarity of the stabilising magnets (41, 42) is perpendicular to the plane P3.

14. Device according to one of claims 1 to 13, wherein the first yoke and the second yoke are symmetrical with each other with respect to the pivot axis XX'.

15. Device according to one of claims 1 to 14, wherein the device is either an electromagnetic-energy converter or an electromagnetic microgenerator.

16. Switch comprising a device (10) according to one of claims 1 to 15.
